Europäisches Patentamt

European Patent Office

Office européen des brevets

(11) Numéro de publication: **0 155 426**
**A1**

(12) # DEMANDE DE BREVET EUROPEEN

(21) Numéro de dépôt: **84402447.1**

(22) Date de dépôt: **29.11.84**

(51) Int. Cl.⁴: **B 29 C 31/00**
**B 29 C 41/04**

(30) Priorité: 02.12.83 FR 8319298

(43) Date de publication de la demande:
25.09.85 Bulletin 85/39

(84) Etats contractants désignés:
AT BE CH DE GB IT LI LU NL SE

(71) Demandeur: LUCHAIRE S.A.
180, Boulevard Haussmann
F-75382 Paris Cédex 08(FR)

(84) Etats contractants désignés:

(71) Demandeur: A.G. INTERNATIONAL S.p.A.
Via Goito, 31
I-10042 Nichelino (Torino)(IT)

(84) Etats contractants désignés:

(72) Inventeur: Pitavy, Michel
7 Avenue le Nôtre
F-92 420 Vaucresson(FR)

(72) Inventeur: Chiappino, Mario
Strada Santa Lucia 65
I-10100 Turin(IT)

(72) Inventeur: Aghemo, Luigi
Strada Val Salice 87
I-10 100 Turin(IT)

(74) Mandataire: Bourgognon, Jean-Marie et al,
Cabinet Flechner 22, Avenue de Friedland
F-75008 Paris(FR)

(54) **Procédé de fabrication de produits en matière thermoplastique de forme creuse et produits ainsi obtenus, par exemple réservoirs de carburants.**

(57) L'invention réside dans le fait, qu'avant l'introduction dans le moule, les grains de matière thermoplastique sont déchargés (ou chargés) de manière à présenter une charge électrostatique aussi faible que possible (ou une charge d'une certaine polarité) Le moule est alors placé dans un four dans lequel il est soumis à différents mouvements ainsi qu'à différents champs électriques pour répartir les grains sur les parois. Enfin, un gaz est introduit dans le moule à la fin de l'opération de chauffage. L'invention est applicable à la fabrication des réservoirs de carburant pour véhicules automobiles.

Procédé de fabrication de produits en matière thermoplastique de
forme creuse et produits ainsi obtenus,par exemple réservoirs de
carburants.

L'invention concerne un procédé de fabrication
de produits en matière thermoplastique de forme creuse, notamment des réservoirs de carburant pour véhicules automobiles ; elle concerne également le produit
obtenu en mettant en oeuvre ledit procédé.

Il existe de nombreux procédés de fabrication
de produits en matière thermoplastique de forme creuse et l'un d'entre eux consiste à introduire dans un
moule de la matière thermoplastique sous forme d'une
poudre, à chauffer ce moule et à le déplacer dans
différentes directions de manière que la poudre se liquéfie et se distribue sur toute la paroi interne du
moule. Le moule est ensuite refroidi de façon à durcir la matière thermoplastique puis le produit est
extrait du moule en ouvrant les deux demi-coquilles
constituant le moule. Un tel procédé est par exemple
décrit dans le brevet français No. 1.403.000.

Un inconvénient du procédé, décrit succinctement ci-dessus, réside dans le fait que les grains de
poudre de la matière thermoplastique sont généralement chargés d'électricité statique quand la poudre
est introduite dans le moule. Les grains ayant des
charges électriques opposées s'attirent mutuellement
et forment de petits grumeaux ou agglomérés qui fondent de manière irrégulière en provoquant fréquemment des défauts et des irrégularités dans les parois du produit obtenu.

Un autre inconvénient de ce procédé réside dans le fait que la température des parois du moule, et donc de la matière plastique, n'est pas connue et ne peut donc pas être contrôlée à chaque instant de sorte qu'il en résulte des irrégularités de structure dans les parois du produit fini lorsque, comme cela arrive souvent, le moule ne se trouve pas tout entier à une température constante.

Le but de la présente invention est donc de mettre en oeuvre un procédé de fabrication de produits en matière thermoplastique de forme creuse du type décrit ci-dessus mais qui ne présente pas les inconvénients précités.

L'objet de la présente invention est donc un procédé de fabrication de produits en matière thermoplastique, notamment des réservoirs de carburant pour véhicules automobiles, qui comprend les opérations suivantes :

- la réalisation d'un moule creux ayant la forme du produit fini à obtenir,

- le montage du moule sur un appareil qui permet de le déplacer dans différentes directions de l'espace,

- l'introduction dans le moule, sous forme de poudre ou granulés, d'une quantité de matière thermoplastique nécessaire pour réaliser le produit fini,

- le chauffage du moule pendant un temps déterminé et son déplacement dans différentes directions de façon que la matière thermoplastique se liquéfie et se distribue sur les parois du moule,

- le refroidissement du moule,

- le démoulage du produit fini,

ledit procédé étant caractérisé par le fait qu'il comprend, en outre, avant l'introduction de la matière thermoplastique, une opération au cours de laquelle la poudre ou granulés peut être déchargée électriquement de manière que chaque grain ait une charge électrostatique la plus faible possible, de préférence nulle.

Une autre caractéristique du procédé réside dans le fait qu'un ou plusieurs champs électriques peuvent être créés autour du moule pendant la phase de chauffage pour obtenir les épaisseurs requises en chaque partie du produit.

Une autre caractéristique de la présente invention réside dans le fait que, avant son introduction dans le four, les grains de poudre peuvent être chargés électriquement de manière à présenter une polarité en relation avec celle des champs électriques.

Une autre caractéristique du procédé réside dans le fait que des mesures des températures des parois du moule sont effectuées de manière à pouvoir éventuellement agir sur les températures à l'intérieur du four et/ou des parois du moule, ainsi que sur les déplacements dudit moule.

Le procédé est également caractérisé par le fait qu'un gaz sous une pression suffisante peut être introduit dans le moule au cours de l'opération de chauffage et y être maintenu jusqu'à la fin de l'opération de refroidissement.

L'équipement employé pour la fabrication d'articles ou produits de forme creuse, notamment des réservoirs de carburant pour véhicules automobiles, en mettant en oeuvre le procédé selon la présente invention, comprend principalement un ou plusieurs moules, un dispositif de support qui permet de déplacer le ou les moules dans différentes directions de l'espace, un dispositif de chargement de la matière thermoplastique dont sera constitué le produit à obtenir, une enceinte chauffante ou four qui permet de recevoir le ou les moules et fournir la chaleur suffisante pour liquéfier la matière thermoplastique utilisée pour réaliser le produit à obtenir, un dispositif de refroidissement et de démoulage des moules et un dispositif de déplacement du support du ou des moules pour le déplacer du dispositif de chargement au four, puis du four au dispositif de refroidissement et de démoulage et enfin de ce dernier dispositif au dispositif de chargement de la matière thermoplastique.

Selon la présente invention, la matière thermoplastique, qui est habituellement sous la forme d'une poudre ou de granulés, est, avant son introduction dans le moule, traitée de manière que chaque grain ait une charge électrostatique la plus faible possible, de préférence nulle. Ce traitement peut être effectué à tout moment avant l'introduction de la poudre ou des granulés dans le moule, ou, au plus tard, au moment de ladite introduction ; il peut être également effectué dans le dispositif de chargement lui-même ou séparément.

Pour effectuer ce traitement, on peut utiliser tous moyens connus mettant en oeuvre par exemple des jets d'air et/ou des actions ionisantes. On peut ainsi utiliser un appareil constitué, par exemple, par une ou plusieurs barres ionisantes et/ou bien par des pistolets ou buses ionisantes à air comprimé ou des dispositifs soufflants d'ionisation ou encore des liquides anti-électrostatiques.

On comprend que, après ce traitement, les grains de poudre de matière thermoplastique ne s'attirent plus entre eux pour former des grumeaux ou des agglomérés car les grains sont électriquement neutres et ne s'attirent plus entre eux.

Après ce traitement, la poudre est introduite dans le ou les moules à l'aide du dispositif de chargement selon une quantité qui est déterminée en fonction des caractéristiques du produit à obtenir.

Le dispositif de support du ou des moules est alors déplacé pour l'amener dans une enceinte chauffante ou four dans lequel règne une température qui est déterminée en fonction principalement de la température de liquéfaction de la matière thermoplastique. C'est dans ce four qu'a lieu le déplacement du ou des moules dans toutes les directions de l'espace de manière à déposer la poudre de matière thermoplastique sur les parois internes du moule qui le contient par gravité et par roulement. Ce déplacement du ou des moules peut s'effectuer suivant différents mouvements, par exemple deux mouvements en rotation autour de deux axes perpendiculaires. Au contact des parois chaudes du moule, les grains de matière thermoplastique se liquéfient et se déposent sur les parois de manière à constituer l'enveloppe du produit fini.

On notera que les matières qui sont habituellement utilisées sont par exemple le polyéthylène, le polypropylène, le polycarbonate et le polyuréthanne.

Selon une caractéristique de la présente invention, il est prévu de créer dans le four et autour du moule des champs électriques de manière à faciliter la répartition des grains de poudre sur les parois du moule en des épaisseurs appropriées en chaque endroit de celui-ci. Ces champs électriques peuvent être différents selon les directions de l'espace pour tenir compte de la forme du produit à obtenir, des mouvements du moule et de la gravité.

Ces champs électriques peuvent être obtenus à l'aide de tous moyens connus, par exemple des électrodes reliées à des générateurs électriques de tensions réglables et disposées dans tout ou partie des parois du four.

On parvient ainsi à obtenir une meilleure répartition de la poudre sur les parois du moule et par exemple une épaisseur constante et uniforme de l'enveloppe du produit à obtenir. On parvient également à obtenir, à la demande, des épaisseurs différentes à des endroits déterminés de l'enveloppe en réglant la valeur des champs électriques mais également en y associant des lois de mouvement des moules appropriées.

Au lieu de traiter les grains de matière thermoplastique afin d'obtenir des grains ayant des charges électrostatiques pratiquement nulles, comme cela a été décrit ci-dessus, il est également avantageux, dans le cas où l'on a besoin de fabriquer des produits ayant des formes complexes, de traiter les grains de matière thermoplastique de manière à charger ceux-ci selon une certaine polarité en fonction de celle des électrodes qui sont utilisées pour créer les champs électriques dans le four et autour du moule.

Toujours selon une caractéristique de la présente invention, il est prévu de mesurer les températures du four, du moule et de la matière thermoplastique à différents endroits et d'utiliser ces mesures pour modifier éventuellement la température du four et, par voie de conséquence, du moule et de la matière thermoplastique.

Ces mesures peuvent être effectuées à l'aide de capteurs répartis dans le four et sur le moule et reliés à des dispositifs de lecture. Dans le cas de capteurs disposés sur le moule, cette liaison sera réalisée à l'aide de contacts frotteurs disposés sur les deux axes de rotation du moule.

Au lieu de faire varier la température du moule en modifiant la température du four, on peut directement modifier la température du moule en disposant, par exemple, des résistances chauffantes sur certaines parois du moule et en faisant varier le courant les traversant.

Selon une autre caractéristique de la présente invention, il est prévu d'introduire dans le moule, à la fin de l'opération de chauffage et de liquéfaction de la matière thermoplastique, un gaz inerte par rapport aux opérations chimiques en cours, par exemple de l'azote. On peut également utiliser un gaz qui réagit avec la matière thermoplastique en cours de liquéfaction de façon, par exemple, à empêcher la formation de bulles de gaz dans l'enveloppe du produit à obtenir. Ce gaz aura une pression suffisante pour maintenir contre les parois du moule l'enveloppe du produit à obtenir. Cette pression sera maintenue dans le moule jusqu'à la fin de l'opération de refroidissement.

Cette opération de refroidissement commence dès que le dispositif de support du ou des moules est sorti du four et le démoulage n'intervient que lorsque l'enveloppe de matière thermoplastique a suffisamment durci. Le gaz peut alors être évacué et certaines parties du moule peuvent être retirées pour permettre l'enlèvement du produit fabriqué de leur dispositif de support. Les moules sont alors prêts pour un nouveau cycle opératoire.

Le procédé selon la présente invention a été décrit dans son application à la fabrication d'un produit mono-couche ; il est clair, cependant, que ce procédé peut être appliqué à la fabrication d'un produit comportant plusieurs couches de matière thermoplastique chargée ou non. En outre, ce procédé permet de fabriquer des produits comportant des inserts qui seront préalablement placés à l'intérieur du moule. Il permet également de fabriquer des produits composites avec l'apport d'une structure résistante noyée dans la matière thermoplastique.

## REVENDICATIONS

1. Procédé de fabrication de produits en matière thermoplastique de forme creuse, notamment des réservoirs de carburant pour véhicules automobiles, comprenant les opérations suivantes :

- la réalisation d'un moule creux ayant la forme du produit fini à obtenir,

- le montage dudit moule sur un appareil qui permet de le déplacer dans différentes directions de l'espace,

- l'introduction dnas le moule, sous forme de poudre ou de granulés, d'une quantité de matière thermoplastique nécessaire pour réaliser le produit fini,

le chauffage du moule pendant un temps déterminé et son déplacement dans différentes directions de façon que la matière thermoplastique se liquéfie et se distribue sur les parois du moule,

- le refroidissement du moule,

- le démoulage du produit fini,

ledit procédé étant caractérisé en ce qu'il comprend,en outre, avant l'introduction de la matière thermoplastique, une opération au cours de laquelle les grains de matière thermoplastique sont traités de manière que chaque grain de matière plastique ait une charge électrostatique appropriée.

2. Procédé selon la revendication 1, caractérisé par le fait qu'il comprend, en outre, la création d'un ou plusieurs champs électriques dans l'espace environnant le moule pendant la phase de chauffage.

3. Procédé selon la revendication 2, caractérisé par le fait que lesdits champs électriques sont variables et ont des valeurs corrélées avec les positions du moule afin d'obtenir les épaisseurs désirées en chaque partie du produit.

4. Procédé selon la revendication 1, 2 ou 3, caractérisé par le fait que les grains de matière thermoplastique ont une charge électrostatique aussi faible que possible, de préférence nulle.

5. Procédé selon la revendication 1, 2 ou 3, caractérisé par le fait que les grains de matière thermoplastique ont une charge électrostatique de même polarité.

6. Procédé selon l'une quelconque des revendications précédentes caractérisé par le fait qu'il comprend, en outre, une opération de mesure des températures des parois du moule, de manière à pouvoir agir sur les températures à l'intérieur du four et/ou des parois du moule , sur les déplacements dudit moule, ainsi que sur les valeurs des champs électriques.

7. Procédé selon l'une quelconque des revendications précédentes, caractérisé par le fait qu'il comprend, en outre, une opération d'introduction et de maintien d'un gaz à l'intérieur du moule pendant tout ou partie des opérations de chauffage et de refroidissement.

8. Procédé selon l'une quelconque des revendications précédentes, caractérisé par le fait que le déplacement du moule dans différentes directions s'effectue par l'intermédiaire de deux mouvements de rotation associés autour de deux axes perpendiculaires de manière à faire circuler la poudre dans toute les parties du moule et à la répartir de manière appropriée sur les parois dudit moule.

9. Produit obtenu en mettant en oeuvre le procédé selon l'une quelconque des revendications précédentes.

Office européen
des brevets

**RAPPORT DE RECHERCHE EUROPEENNE**

EP  84 40 2447

## DOCUMENTS CONSIDERES COMME PERTINENTS

| Catégorie | Citation du document avec indication, en cas de besoin des parties pertinentes | Revendication concernée | CLASSEMENT DE LA DEMANDE (Int CI 4) |
|---|---|---|---|
| Y | FR-A-1 516 824  (SOCIETE UNIVERSELLE DE FABRICATION D'APPAREILS MENAGERS S.U.F.A.M.) * Page 1, colonne de gauche, lignes 1-18, colonne de droite, lignes 18-24; figure 3 * | 1-7 | B 29 C   31/00 B 29 C   41/04 |
| A | | 8,9 | |
| | --- | | |
| Y | FR-A-1 497 746  (CONTINENTAL CAN CO., INC.) * Page 1, colonne de droite, lignes 24-34; page 2, colonne de gauche, ligne 24 - colonne de droite, ligne 17 * | 1 | |
| | --- | | |
| Y | US-A-3 491 170  (S.F. ROE) * Colonne 3, ligne 73 - colonne 5, ligne 41; colonne 7, ligne 27 - colonne 8, ligne 57; figures 1-3 * | 2,3,5 | **DOMAINES TECHNIQUES RECHERCHES (Int. Cl.4)** |
| Y | FR-A-1 598 657  (CHEMISCHE WERKE HÜLS AG) * Page 1, lignes 1-38 * | 4 | B 29 C B 22 F H 05 F |
| | --- | | |
| Y | US-A-3 754 852  (D.G. REMPEL) * Colonne 8, lignes 14-31; figures 1-3 * | 6 | |
| | ---            -/- | | |

Le present rapport de recherche a été établi pour toutes les revendications

| Lieu de la recherche | Date d'achèvement de la recherche | Examinateur |
|---|---|---|
| LA HAYE | 09-05-1985 | SZAMOCKI G.J.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& · membre de la même famille, document correspondant

OEB Form 1503 03 82

**RAPPORT DE RECHERCHE EUROPEENNE**

Office européen
des brevets

EP  84 40 2447

| | **DOCUMENTS CONSIDERES COMME PERTINENTS** | | Page  2 |
|---|---|---|---|

| Categorie | Citation du document avec indication. en cas de besoin des parties pertinentes | Revendication concernee | CLASSEMENT DE LA DEMANDE (Int Cl 4) |
|---|---|---|---|
| Y | US-A-3 329 751  (R.P. SLICKER et al.) <br> * En entier * | 7 | |
| D,A | FR-A-1 403 000  (CONTAINER CORP. OF AMERICA) <br> * Page 1, colonne de droite * | 1 | |

DOMAINES TECHNIQUES
RECHERCHES (Int Cl.4)

Le present rapport de recherche a été etabli pour toutes les revendications

| Lieu de la recherche <br> LA HAYE | Date d achevement de la recherche <br> 09-05-1985 | Examinateur <br> SZAMOCKI G.J.A. |
|---|---|---|

CATEGORIE DES DOCUMENTS CITES

X . particulièrement pertinent à lui seul
Y . particulièrement pertinent en combinaison avec un autre document de la même catégorie
A : arrière-plan technologique
O . divulgation non-écrite
P : document intercalaire

T  theorie ou principe à la base de l'invention
E . document de brevet antérieur, mais publié a la date de dépôt ou après cette date
D : cité dans la demande
L : cité pour d'autres raisons

&  membre de la même famille, document correspondant

OEB Form 1503 03 82